(19) Europäisches Patentamt / European Patent Office / Office européen des brevets

(11) **EP 4 516 843 A1**

(12) **EUROPEAN PATENT APPLICATION**
published in accordance with Art. 153(4) EPC


(43) Date of publication:
**05.03.2025 Bulletin 2025/10**

(21) Application number: **22940392.8**

(22) Date of filing: **21.11.2022**

(51) International Patent Classification (IPC):
***C08J 5/22*** *(2006.01)* ***C08F 212/36*** *(2006.01)*
***B01D 61/42*** *(2006.01)* ***C02F 1/469*** *(2023.01)*

(52) Cooperative Patent Classification (CPC):
**B01D 61/42; C02F 1/469; C08F 212/36; C08J 5/22**

(86) International application number:
**PCT/KR2022/018424**

(87) International publication number:
**WO 2023/210898 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2022 KR 20220051536**



(71) Applicant: **Toray Advanced Materials Korea Inc.**
**Gumi-si, Gyeongsangbuk-do 39389 (KR)**

(72) Inventors:
- **CHOO, Jeong Joo**
**Gumi-si, Gyeongsangbuk-do 39389 (KR)**
- **CHAR, Bong Jun**
**Gumi-si, Gyeongsangbuk-do 39389 (KR)**
- **KIM, Ji Hwan**
**Gumi-si, Gyeongsangbuk-do 39389 (KR)**

(74) Representative: **Mewburn Ellis LLP**
**Aurora Building**
**Counterslip**
**Bristol BS1 6BX (GB)**


(54) **ANION EXCHANGE MEMBRANE**


(57) Disclosed is an anion exchange membrane. The anion exchange membrane includes: a porous polymer support; and an anion exchange polymer, wherein the anion exchange polymer is situated on a surface and in pores of the porous polymer support, anion exchange groups of the anion exchange polymer are uniformly distributed on the surface and in the pores of the porous polymer support, the porous polymer support has a basis weight of about 10 $g/m^2$ to about 60 $g/m^2$, and the anion exchange polymer may be a crosslinked product of a composition including a crosslinkable monomer represented by Formula 1.


FIG. 2

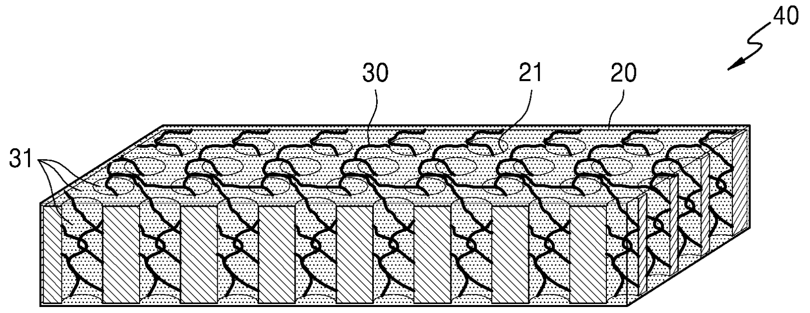

FIG. 2

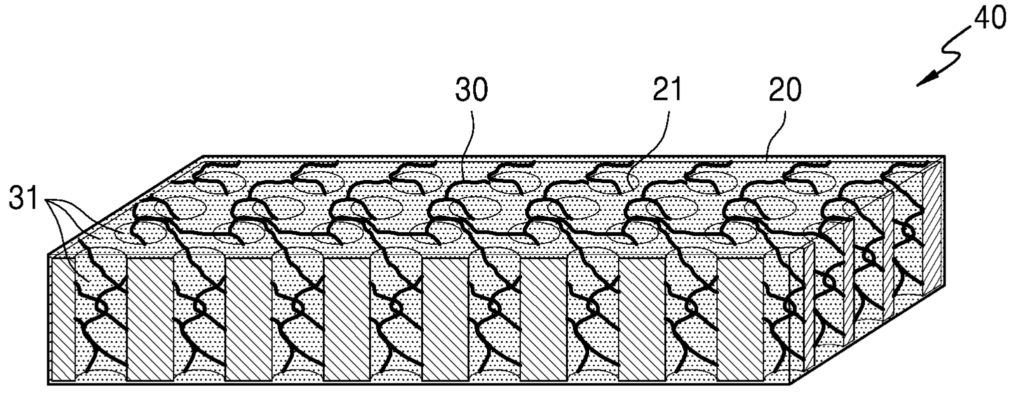

## Description

### Technical Field

The disclosure relates to an anion exchange membrane.

### Background Art

An ion exchange membrane refers to a synthetic polymer membrane designed to selectively permeate either cations or anions. An anion exchange membrane is a synthetic polymer membrane with positively charged groups that selectively permeate anions. Such anion exchange membranes may be utilized in water treatment systems such as electrodialysis, bipolar membrane electrodialysis, capacitive desalination, electro-deionization, and the like, or may be utilized in systems such as fuel cells, water electrolysis, reverse electrodialysis, and redox flow battery. A system to which an anion exchange membrane is applied may apply acidic or alkaline raw water to the process, and while processing the raw water, an acid or alkali may be generated. Here, a perfluorinated anion exchange membrane may be used as an anion exchange membrane, but due to its high price, in practice, a hydrocarbon-based anion exchange membrane is applied to the system. However, due to its issues with chemical resistance, a hydrocarbon-based anion exchange membrane is limited in the process and conditions to which it can be applied. In addition, anion-exchange membranes contain a certain portion of support fraction therein, and thus are limited in terms of increasing ion exchange capacity to improve film performance.

### Disclosure of Invention

### Technical Problem

One aspect of the present disclosure provides an anion exchange membrane having low sheet resistance and high ion exchange capacity, and showing excellent chemical resistance in the presence of high-concentration acids and alkalis.

Another aspect of the present disclosure provides a method of preparing the anion exchange membrane.

### Solution to Problem

According to one aspect, provided is an anion exchange membrane including:

a porous polymer support; and
an anion exchange polymer,
wherein the anion exchange polymer is situated on a surface and in pores of the porous polymer support,
anion exchange groups of the anion exchange polymer are uniformly distributed on the surface and in the pores of the porous polymer support,
the porous polymer support has a basis weight of about 10 g/$m^2$ to about 60 g/$m^2$, and
the anion exchange polymer is a crosslinked product of a composition including a crosslinkable monomer represented by Formula 1.

[Formula 1]

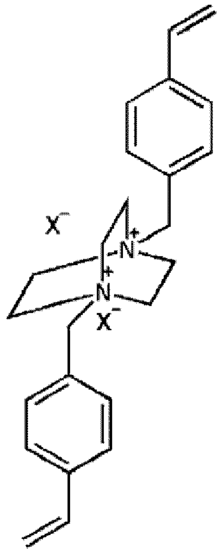

In Formula 1,
$X^-$ may be $F^-$, $Cl^-$, $Br^-$, or $I^-$.

The porous polymer support may be a nonwoven fabric structure or a membrane structure.
The membrane structure may be a structure having uniformly arranged pores, or a 3D network structure.
The porous polymer support may have a porosity of about 30 % to about 80 %.
The porous polymer support may include one or more polymers selected from among polyethylene, polypropylene, polyethylene terephthalate, polyvinylalcohol, polybenzimidazole, polyarylene sulfide, polyetherether ketone, polyether sulfone, polysulfone, polystyrene, poly(arylene ether sulfone), and polyether ketone.
The porous polymer support may have a thickness of about 10 μm to about 110 μm.
The anion exchange membrane may have an average thickness of about 10 μm to about 200 μm.
The anion exchange membrane may have an ion exchange capacity of 1.5 meq/g or more.
The anion exchange membrane may have a sheet resistance of 10 $\Omega \cdot cm^2$ or less.
The anion exchange membrane may be utilized in electrodialysis, bipolar membrane electrodialysis, electrodeionization, capacitive deionization, and water electrolysis.

## Advantageous Effects of Invention

An anion exchange membrane according to one aspect may be a film in which an anion exchange polymer, which is a crosslinking product of a composition containing a crosslinkable monomer represented by Formula 1 above, is situated on a surface and in pores of a porous polymer support having a basis weight of about 10 $g/m^2$ to about 60 $g/m^2$, wherein anion exchange groups of the anion exchange polymer are uniformly distributed on the surface and in the pores of the porous polymer support.
The anion exchange membrane may afford high ion exchange capacity and low sheet resistance by increasing the content of the anion exchange polymer within the anion exchange membrane. In addition, the anion exchange membrane due to its excellent chemical resistance may be utilized in highly concentrated acidic and alkaline conditions.

## Brief Description of Drawings

FIG. 1 is a schematic diagram of a common anion exchange membrane.
FIG. 2 is a schematic diagram of an anion exchange membrane according to an embodiment.
FIG. 3 is a scanning electron microscope (SEM) photograph showing a structure of a porous polymer support used in an anion exchange membrane prepared in Example 4.
FIG. 4 is a schematic flowchart of a method of preparing an anion exchange membrane according to an embodiment.

**Mode for the Invention**

Hereinbelow, an anion exchange membrane will be described in greater detail with reference to examples and the drawings of the present disclosure. The following examples are for illustrative purposes only to describe the present disclosure in greater detail, and it will be apparent to those skilled in the art that these examples should not be construed as limiting the scope of the present disclosure.

Unless otherwise defined, all technical and scientific terms used herein have the same meaning as commonly understood by one of ordinary skill in the technical field to which the present application belongs. In the case of any inconsistencies, the present disclosure, including any definitions therein will prevail. Methods and materials similar or equivalent to those described herein may be used in implementation or experiments of the present disclosure, but suitable methods and materials are described herein. The term "comprise(s)" and/or "comprising," or "include(s)" and/or "including" as used herein, unless otherwise specified, does not preclude the presence or addition of one or more other elements. As used herein, the term "a combination thereof" refers to a mixture or combination of one or more of the described components. As used herein, the term "and/or" includes any and all combinations of one or more of the associated listed items. The term "or" as used herein means "and/or". Expressions such as "at least one of," or "one or more" as used herein, when preceding a list of elements, modify the entire list of elements and do not modify the individual elements of the list. Throughout the specification, it is to be understood that when one component is described as being "on" or "above" another component, the component may be directly on the other component, or intervening components may be present between the component and the other component. Meanwhile, when one element is described as being placed "directly on" or "directly above" another element, there may be no other elements intervening therebetween. As used herein, the terms "-based resin", "-based polymer", or/and "-based copolymer" are broad concepts encompassing all of "-based resin", "-based polymer", "-based copolymer", or/and "derivatives from -based resin, polymer, or copolymer". As used herein, the term "polymer or copolymer crosslinked with these resins" refers to "polymer or copolymer crosslinked with the aforementioned resin".

FIG. 1 is a schematic diagram of a common anion exchange membrane.

As shown in FIG. 1, an anion exchange membrane 10 may have an anion exchange polymer backbone 2 having a cation group 1 on a support 5. The anion exchange membrane 10 selectively permeates a counter anion 3 when passing the counter anion 3 and a co-cation 4 from left to right.

Generally, the anion exchange membrane 10 is expected to possess high perm selectivity, low electrical resistance, high mechanical strength, high chemical stability, and the like. Types of the anion exchange membrane 10 may include a perfluorinated anion exchange membrane and a hydrocarbon-based anion exchange membrane. Between these two types, the hydrocarbon-based anion exchange membrane may be more cost-effective, but due to its low chemical resistance, may be limited in the processes and conditions to which it can be applied. In addition, the hydrocarbon-based anion exchange membrane due to having a certain portion of support fraction therein, may be limited in increasing ion exchange capacity to enhance performance of the membrane.

In this context, the present inventors propose an anion exchange membrane and a method of preparing the same as follows.

An anion exchange membrane according to an embodiment may include a porous polymer support; and an anion exchange polymer, wherein the anion exchange polymer may be situated on a surface and in pores of the porous polymer support, anion exchange groups of the anion exchange polymer may be uniformly distributed on the surface and in the pores of the porous polymer support, the porous polymer support may have a basis weight of about 10 $g/m^2$ to about 60 $g/m^2$, and the anion exchange polymer may be a crosslinked product of a composition containing a crosslinkable monomer represented by Formula 1:

[Formula 1]

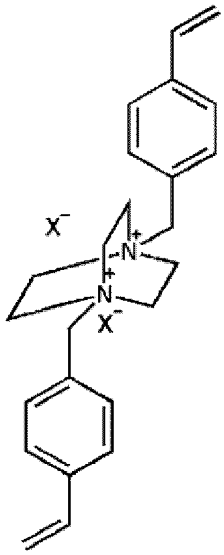

In Formula 1,
$X^-$ may be $F^-$, $Cl^-$, $Br^-$, or $I^-$.

An anion exchange membrane according to an embodiment may have high ion exchange capacity and low sheet resistance by having an increased amount of an anion exchange polymer within the anion exchange membrane. In addition, the anion exchange membrane due to its excellent chemical resistance may be utilized in highly concentrated acidic and alkaline conditions.

FIG. 2 is a schematic diagram of an anion exchange membrane according to an embodiment.

As shown in FIG. 2, in an anion exchange membrane 40 according to an embodiment, an anion exchange polymer 31 having cation groups may be situated on a surface and in pores 21 of a porous polymer support 20. The anion exchange polymer 31 having cation groups due to its uniform distribution on the surface and in the pores 21 of the porous polymer support 20, may provide a uniform anion exchange membrane 40. The above anion exchange membrane 40 may have low sheet resistance and high ion conductivity. In addition, the porous polymer support 20 may improve mechanical durability and have high dimensional stability.

The anion exchange polymer may be a crosslinked product of a composition including a crosslinkable monomer represented by Formula 1. The crosslinkable monomer represented by Formula 1 may be a monomer having two vinylbenzyl chlorides crosslinked with a bi-functional cyclic diamine containing a pendant chains that has quaternary ammonium cation groups attached thereto. The crosslinkable monomer represented by Formula 1, by forming a rigid cage structure, may improve ion exchange capacity while having chemical stability in highly concentrated acidic or alkaline conditions. Accordingly, the anion exchange membrane including the above anion exchange polymer may have excellent film performance. "Crosslinked product" includes all of initial reaction products, intermediate reaction products, and final reaction products in addition to cured products of a composition containing a crosslinkable monomer represented by Formula 1.

The porous polymer support may be a nonwoven fabric structure or a membrane structure.

The membrane structure may be a structure having uniformly arranged pores, or a 3D network structure. The structure of such a membrane structure may be confirmed by FIG. 3 described below. For example, the membrane structure may form a microporous structure by extruding a mixture containing a polymer material and a low-molecular weight wax into a film at high temperatures, and then extracting the wax with a solvent. Alternatively, the membrane structure may form a porous structure by uniaxial or biaxial elongation and heat-treatment processes without using wax. However, without being limited to the aforementioned methods, the membrane structure may be formed by any preparation method available in the art.

The porous polymer support may have a basis weight of about 10 $g/m^2$ to about 60 $g/m^2$. When the porous polymer support has a basis weight of less than 10 $g/m^2$, it may be difficult to achieve improvement in physical durability and mechanical strength of an anion exchange membrane that is sought to be obtained by application of the porous polymer support. When the porous polymer support has a basis weight of more than 60 $g/m^2$, the fraction of porous polymer support occupied in the anion exchange membrane may become excessively high, thus causing an increase in sheet resistance of the anion exchange membrane and a decrease in the ion exchange capacity thereof.

The porous polymer support may have a porosity of about 30 % to about 80 %. For example, the porous polymer support may have a porosity of about 35 % to about 70 %, about 40 % to about 65 %, about 45 % to about 60 %, or about 45 % to about 55 %. When the pore size or/and porosity of the porous polymer support is less than 30 %, it may be difficult to

achieve improvement in physical durability and mechanical strength of the anion exchange membrane that is sought to be obtained with the porous polymer support. When the porous polymer support has a pore size or/and porosity of more than 80 %, the fraction of porous polymer support occupied in the anion exchange membrane may become excessively high, causing an increase in sheet resistance and a decrease in ion exchange capacity.

The porous polymer support may include one or more polymers selected from among polyethylene, polypropylene, polyethylene terephthalate, polyvinylalcohol, polybenzimidazole, polyarylene sulfide, polyetherether ketone, polyether sulfone, polysulfone, polystyrene, poly(arylene ether sulfone), and polyether ketone. For example, the porous polymer support may be polyvinyl alcohol, polyethylene or polypropylene. For example, the porous polymer support may be polyvinyl alcohol or polypropylene.

The porous polymer support may have a thickness of about 10 μm to about 110 μm. For example, the porous polymer support may have a thickness of about 20 μm to about 110 μm, about 40 μm to about 110 μm, or about 60 μm to about 110 μm. Within the above range of the thickness of the porous polymer support, the sheet resistance may decrease, and the ion exchange capacity may increase.

The anion exchange membrane may have an average thickness of about 10 μm to about 200 μm. For example, the anion exchange membrane may have an average thickness of about 12 μm to about 150 μm. When the average thickness of the anion exchange membrane is less than 10 μm, the physical curability and handling properties of the anion exchange membrane may deteriorate, thus causing the risk of membrane damage during module assembly or during operation after system application, and system operation performance may deteriorate from permeating of unnecessary ions. When the average thickness of the anion exchange membrane exceeds 200 μm, the sheet resistance may become excessively high that the amount of power required for operation when applied to a system and the like may increase and the system operation performance may deteriorate.

The anion exchange membrane may have an ion exchange capacity of 1.5 meq/g or more. For example, the anion exchange membrane may have an ion exchange capacity of 1.6 meq/g or more, 1.7 meq/g or more, 1.8 meq/g or more, 1.9 meq/g or more, 2.0 meq/g or more, 2.1 meq/g or more, 2.2 meq/g or more, 2.3 meq/g or more, or 2.4 meq/g.

The anion exchange membrane may have a sheet resistance of 10 $\Omega \cdot cm^2$ or less. For example, the anion exchange membrane may have a sheet resistance of 9.9 $\Omega \cdot cm^2$ or less, 9.8 $\Omega \cdot cm^2$ or less, 9.7 $\Omega \cdot cm^2$ or less, 9.6 $\Omega \cdot cm^2$ or less, 9.0 $\Omega \cdot cm^2$ or less, 8.5 $\Omega \cdot cm^2$ or less, 8.0 $\Omega \cdot cm^2$ or less, 7.8 $\Omega \cdot cm^2$ or less, 7.6 $\Omega \cdot cm^2$ or less, 7.2 $\Omega \cdot cm^2$ or less, 6.5 $\Omega \cdot cm^2$ or less, 6.0 $\Omega \cdot cm^2$ or less, 5.0 $\Omega \cdot cm^2$ or less, 4.0 $\Omega \cdot cm^2$ or less, or 3.0 $\Omega \cdot cm^2$ or less.

The anion exchange membrane may be utilized in electrodialysis, bipolar membrane electrodialysis, electrodeionization, capacitive deionization, and water electrolysis. The anion exchange membrane may have excellent concentrated desalting capability.

A method of preparing an anion exchange membrane according to another embodiment may include: providing a porous polymer support; preparing an anion exchange polymer forming composition containing a crosslinkable monomer represented by Formula 1, a photoinitiator, and a solvent; impregnating the porous polymer support with the anion exchange polymer forming composition to thereby fill the composition on a surface and in pores of the porous polymer support; pressing a polyester-based film on at least one surface of the porous polymer support filled with the composition to thereby prepare a laminate in which the polyester-based film and the porous polymer support are combined; irradiating a light to the laminate and crosslinking the composition to form an anion exchange polymer, which is a crosslinked product of the composition, on the surface and in the pores of the porous polymer support; and preparing an anion exchange membrane by exfoliating the polyester-based film from the porous polymer support having the anion exchange polymer formed on the surface and in the pores thereof, wherein the porous polymer support may be a nonwoven fabric structure or a membrane structure and may have a basis weight of about 10 $g/m^2$ to about 60 $g/m^2$.

[Formula 1]

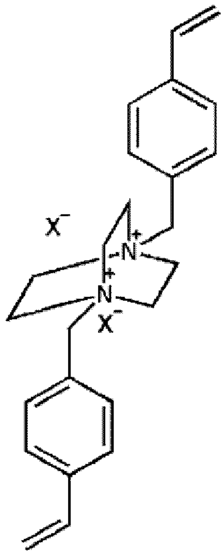

In Formula 1,
$X^-$ may be $F^-$, $Cl^-$, $Br^-$, or $I^-$.

The method of preparing an anion exchange membrane may provide an anion exchange membrane having low sheet resistance and high ion exchange capacity, and showing excellent chemical resistance in the presence of high-concentration acids and alkalis.

FIG. 4 is a schematic flowchart for a method of preparing an anion exchange membrane according to an embodiment.

Referring to FIG. 4, first, a porous polymer support may be provided (S1).

The porous polymer support may have a porosity of about 30 % to about 80 %. For example, the porous polymer support may have a porosity of about 35 % to about 70 %, about 40 % to about 65 %, about 45 % to about 60 %, or about 45 % to about 55 %. When the pore size or/and porosity of the porous polymer support is less than 30 %, it may be difficult to achieve an improvement in physical durability and mechanical strength of the anion exchange membrane that is sought to be obtained with the porous polymer support. When the porous polymer support has a pore size or/and porosity of more than 80 %, the fraction of porous polymer support occupied in the anion exchange membrane may become excessively high, thus causing an increase in sheet resistance and a decrease in ion exchange capacity.

The porous polymer support may be a nonwoven fabric structure or a membrane structure.

The porous polymer support may include one or more polymers selected from among polyethylene, polypropylene, polyethylene terephthalate, polyvinylalcohol, polybenzimidazole, polyarylene sulfide, polyetherether ketone, polyether sulfone, polysulfone, polystyrene, poly(arylene ether sulfone), and polyether ketone. For example, the membrane structure may be polyvinyl alcohol, polyethylene or polypropylene. For example, the membrane structure may be polyvinyl alcohol or polypropylene.

The porous polymer support may have a thickness of about 10 μm to about 110 μm. For example, the porous polymer support may have a thickness of about 20 μm to about 110 μm, about 40 μm to about 110 μm, or about 60 μm to about 110 μm. Within the above range of the thickness of the porous polymer support, the sheet resistance may decrease, and the ion exchange capacity may increase.

The porous polymer support may have a basis weight of about 10 $g/m^2$ to about 60 $g/m^2$. When the porous polymer support has a basis weight of less than 10 $g/m^2$, it may be impossible to achieve an improvement in physical durability and mechanical strength of an anion exchange membrane that is sought to be obtained by applying the porous polymer support. When the porous polymer support has a basis weight of more than 60 $g/m^2$, the fraction of porous polymer support occupied in the anion exchange membrane may become excessively high, thus causing an increase in sheet resistance of the anion exchange membrane and a decrease in the ion exchange capacity thereof.

The porous polymer support, due to its hydrophobic properties, may not ensure sufficient wettability with anion exchange polymers and as a result, may not be able to achieve the desired film performance.

To address this issue, prior to impregnating the porous polymer support with the anion exchange polymer forming composition, the process of immersing the porous polymer support in a surfactant solution and drying the support to thereby prepare a porous polymer support having a hydrophilized surface may be further included. The surfactant may be any surfactant available in the art that can be hydrophilized. For example, the surfactant may be one or more materials selected from among dodecylbenzene sulfonic acid (DBSA), alkylbenzene sulfonic acid (ABS), linear alkylbenzene sulfonic acid (LAS), alphasulfonic acid (AS), alphaolefin sulfonic acid (AOS), alcohol polyoxyethylene ether (AE), and

alcohol polyoxyethylene ether sulfonic acid (AES). For example, dodecylbenzene sulfonic acid may be used as the surfactant. The surfactant may be hydrophilized as its hydrophobic portion binds to the hydrophobic surface of the porous polymer support via hydrophobic-hydrophobic interactions, and the hydrophilic portion of the surfactant replaces the surface of the porous polymer support. Here, not only the outer surface of the porous polymer support, but also the entire surface of pores therein may be hydrophilized by the surfactant. However, this hydrophilization process may be omitted if the degree of hydrophilization of the porous polymer support is sufficient, or if the pores of the porous polymer support are sufficiently large that an anion exchange polymer forming composition can be filled therein.

The surfactant solution may include about 0.001 wt% to about 6 wt% of a surfactant and the remainder of a solvent. For example, the surfactant solution may include about 0.01 wt% to about 4 wt% of a surfactant and the remainder of solvent, or about 0.05% to about 3% of a surfactant and the remainder of solvent. If the surfactant is included in an amount of less than 0.001 wt% in the surfactant solution, the surface of the porous polymer support may not be hydrophilized thus failing to cause the anion exchange polymer forming composition to fill the pores of the porous polymer support. If the surfactant is included in an amount of more than 6 wt% in the surfactant solution, it may cause the surfactant to be eluted or decrease the filling amount of the anion exchange polymer forming composition.

The immersion may be conducted for about 0.1 minute to about 10 minutes, for example, for about 0.5 minute to about 5 minutes. When the immersion time is less than 0.1 minute, it may cause insufficient hydrophilization of the surface of the porous polymer substrate and as a result, the anion exchange polymer forming composition may fail to fill in the pores. When the immersion time exceeds 10 minutes, it may decrease the production speed and increase the production costs. The drying may be conducted at a temperature of about 40 °C to about 90 °C, for about 1 minute to about 20 minutes. For example, the drying may be conducted at a temperature of about 40 °C to about 80 °C, for about 1 minute to about 10 minutes.

Next, an anion exchange polymer forming composition containing a crosslinkable monomer represented by Formula 1, a photoinitiator, and a solvent may be prepared (S2).

The crosslinkable monomer represented by Formula 1 may be a monomer having two vinylbenzyl chlorides crosslinked with a bi-functional cyclic diamine containing a pendant chains that has quaternary ammonium cation groups attached thereto. The crosslinkable monomer represented by Formula 1, by forming a rigid cage structure, may improve ion exchange capacity while having chemical stability in highly concentrated acidic or alkaline conditions. Accordingly, the anion exchange membrane including the above anion exchange polymer may have excellent concentrated desalting capability. "Crosslinked product" includes all of initial reaction products, intermediate reaction products, and final reaction products in addition to cured products of a composition containing a crosslinkable monomer represented by Formula 1. The amount of the crosslinkable monomer represented by Formula 1 may be about 30 wt% to about 70 wt% with respect to the total 100 wt% of the anion exchange polymer forming composition.

The photoinitiator may be about 0.01 wt% to about 2 wt%, or about 0.1 wt% to about 1 wt% with respect to the total 100 wt% of the anion exchange polymer forming composition. The photoinitiator may be any photoinitiator available in the art, and may be, for example, 2-hydroxy-2-methylpropiophenone. The solvent may be any solvent available in the art, and may be an aqueous solvent such as for example, water, methanol, or ethanol, and may be distilled water. The solvent may be included in the remainder amount in the anion exchange polymer forming composition, exceptthe crosslinkable monomer represented by Formula 1 and the photoinitiator.

Next, the porous polymer support may be impregnated with the anion exchange polymer forming composition to fill a surface of the porous polymer support and the pores with the composition (S3). The impregnation may be conducted for about 0.1 minute to about 10 minutes, for example, for about 0.5 minute to about 5 minutes. When the impregnation is conducted for less than 0.1 minute, it may cause insufficient filling of the anion exchange polymer forming composition inside the pores of the porous polymer support, thus causing the performance of anion exchange membrane to deteriorate, or leakage. When the impregnation is conducted for more than 10 minutes, it may decrease the production speed and increase the production costs. The above impregnation process may allow the anion exchange polymer forming composition to fill in the pores of the porous polymer support, and the anion exchange polymer forming composition to cover the outer surface of the porous polymer support.

Next, a polyester-based film may be pressed on at least one surface of the porous polymer support filled with the composition to prepare a laminate in which the polyester-based film and the porous polymer support are combined (S4).

The polyester-based film may be pressed on the top surface or/and bottom surface of the porous polymer support by roll calendering. The polyester-based film may be, for example, a polyethylene terephthalate film. The polyester-based film may have a thickness of about 10 μm to about 150 μm, for example, about 20 μm to about 120 μm, or about 30 μm to about 100 μm. When the thickness of the polyester-based film is less than 10 μm, it may give rise to a lamination defect, such as film warpage when laminating with the porous polymer support filled with the anion exchange polymer. When the thickness of the polyester-based film exceeds 150 μm, during the crosslinking reaction described below, the polyester-based film may be too thick that it may cause insufficient irradiation of light to the porous polymer support, resulting in an insufficient crosslinking reaction. One surface of the polyester-based film that comes in contact with the porous polymer support may be untreated or may have been treated with a release agent. Use of such a film may prevent the anion

exchange polymer from being removed from the support surface by hindering the binding to the porous polymer support having a hydrophilized surface. The pressing may be conducted at a temperature of about 10 °C to about 35 °C, for example, about 15 °C to about 30 °C, and at a pressure of about 0 bar to about 5 bar. The pressure may be appropriately adjusted in view of the thickness of the porous polymer support and the thickness of the polyester-based film.

Next, the laminate may be irradiated with light and the composition may be crosslinked, to form an anion exchange polymer which is a crosslinked product of the composition in the pores and on the surface of the porous polymer support (S5).

The light may be a UV light, and for example, may UVA, UVB, UVC or/and UVV. For example, the light irradiation may be conducted using UVC, at a dose of 2,000 $mJ/cm^2$ to about 10,000 $mJ/cm^2$, for example, at a dose of about 2,000 $mJ/cm^2$ to about 8,000 $mJ/cm^2$.

When the UV light being irradiated is at a dose less than the above ranges, the crosslinking reaction of the anion exchange polymer forming composition may not proceed successfully. When the UV light being irradiated is at a dose greater than the above ranges, the energy may be too high that the porous polymer support and polyester-based film may melt or be carbonized.

Finally, the polyester-based film may be exfoliated from the porous polymer support having the anion exchange polymer formed in the pores and on the surface thereof to produce an anion exchange membrane. The exfoliation may be performed by pulling the polyester-based film apart from the porous polymer support by using a detachable roll.

Hereinbelow, the present disclosure will be described in greater detail with reference to examples. However, the following examples are provided only to illustrate the present disclosure, and these examples are not intended to limit the scope of the present disclosure.

[EXAMPLES]

**Example 1: Preparation of Anion Exchange Membrane**

A polyvinylalcohol porous polymer support (basis weight: 22.5 $g/m^2$, porosity: 80%) having a thickness of 90 μm was prepared.

Apart from the above, 4-vinylbenzyl chloride solution in methanol was added to 1,4-diazabicyclo[2,2,2]octane solution in methanol until the molar ratio of vinylbenzyl chloride and 1,4-diazabicyclo[2,2,2]octane is 2:1, followed by stirring at room temperature under an inert atmosphere to produce a mixture.

The mixture was filtered and washed with methanol, and then dried at room temperature under vacuum to produce a crosslinkable monomer represented by Formula 1.

66 wt% of the crosslinkable monomer represented by Formula 1, 0.6 wt% of 2-hydroxy-2-methylpropiophenone (manufactured by Ciba) photoinitiator, and the remainder of distilled water were mixed to make the total of 100 wt% of an anion exchange polymer forming composition.

The polyvinyl alcohol porous polymer support was impregnated with the anion exchange polymer forming composition to thereby fill the pores and surface of the porous polymer support with the composition. The porous polymer support filled with the composition was introduced into a press roll, and a polyester film having a thickness of 50 μm was pressed on upper and lower surfaces of the porous polymer support, to produce a laminate in which the polyester film and the porous polymer support are combined. The laminate was irradiated using UVC as UV rays at a dose of 3000 $mJ/cm^2$ to form an anion exchange polymer, which is a crosslinked product of the composition, inside the pores and surface of the porous polymer support. By exfoliating the polyester-based film from the porous polymer support having the anion exchange polymer formed in the pores and on the surface, an anion exchange membrane was produced.

[Formula 1]

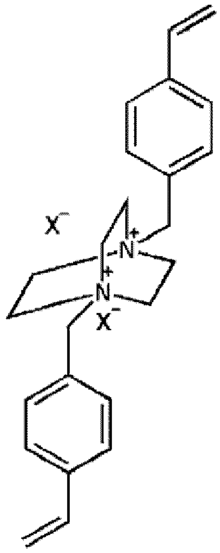

In Formula 1, $X^-$ is $Cl^-$.

**Example 2: Preparation of Anion Exchange Membrane**

An anion exchange membrane was prepared following the same process as Example 1, except that a polyvinyl alcohol porous polymer support (basis weight: 34.9 g/$m^2$, porosity: 77%) having a thickness of 125 μm was used.

**Example 3: Preparation of Anion Exchange Membrane**

An anion exchange membrane was prepared following the same process as Example 1, except that a polyvinyl alcohol porous polymer support (basis weight: 46.4 g/$m^2$, porosity: 74%) having a thickness of 150 μm was used.

**Example 4: Preparation of Anion Exchange Membrane**

An anion exchange membrane was prepared following the same process as Example 1, except that a polypropylene porous polymer support (basis weight: 25.0 g/$m^2$, porosity: 55%) having a thickness of 60 μm was used.

**Example 5: Preparation of Anion Exchange Membrane**

An anion exchange membrane was prepared following the same process as Example 1, except that a polypropylene porous polymer support (basis weight: 40.7 g/$m^2$, porosity: 45%) having a thickness of 80 μm was used.

**Example 6: Preparation of Anion Exchange Membrane**

An anion exchange membrane was prepared following the same process as Example 1, except that a polypropylene porous polymer support (basis weight: 52.8 g/$m^2$, porosity: 48%) having a thickness of 110 μm was used.

**Comparative Example 1: Preparation of Anion Exchange Membrane**

An anion exchange membrane was prepared following the same process as Example 1, except that a polyvinyl alcohol porous polymer support (basis weight: 61.0 g/$m^2$, porosity: 60%) having a thickness of 210 μm was used.

**Comparative Example 2: Preparation of Anion Exchange Membrane**

An anion exchange membrane was prepared following the same process as Example 1, except that a polypropylene porous polymer support (basis weight: 62.8 g/$m^2$, porosity: 29%) having a thickness of 150 μm was used.

**Comparative Example 3: Preparation of Anion Exchange Membrane**

42 wt% of (3-acrylamidopropyl)trimethylammonium chloride (manufactured by TCI), 14 wt% of N,N'-methylenebisacrylamide (manufactured by Merck), 0.6 wt% of a 2-hydroxy-2-methylpropiophenone photoinitiator (manufactured by Ciba), and the remainder of distilled water were mixed together to form the total of 100 wt% of an anion exchange polymer forming composition, and except that this composition was used, an anion exchange membrane was prepared following the same process as Example 1.

**Analysis Example 1: Scanning Electron Microscopy (SEM) Image**

Using a scanning electron microscope (SEM) at 30K magnification, a structure of the porous polymer support used in the anion exchange membrane prepared in Example 4 was examined. As the SEM, a Hitachi S-5500 was used. The results thereof are shown in FIG. 3.

FIG. 3 shows that the porous polymer support used in the anion exchange membrane prepared in Example 4 has a 3D network structure.

**Evaluation Example 1: Evaluation of Physical Properties**

Physical properties of the respective anion exchange membranes prepared in Examples 1-6 and Comparative Examples 1-3 were evaluated as follows.

(1) Sheet Resistance ($\Omega \cdot cm^2$)

Each anion exchange membrane was cut to 5 cm x 5 cm and prepared as a sample. The sample was immersed in 0.5 M NaCl solution (aq.). The sample was positioned between electrodes for sheet resistance measurement, and using an LCR meter (E4908A, Agilent), linear resistance ($R_1$) of the anion exchange membrane and resistivity ($R_2$) of 0.5 M NaCl solution (aq.) were measured.

Using the measurement values of resistivities ($R_1$, $R_2$), sheet resistance ($R_m$) was obtained from Equation 1. The results thereof are shown in Table 1.

[Equation 1]

$$Rm(\Omega \cdot cm^2) = (R_1 - R_2) \times S$$

In Equation 1,

$R_m$ represents sheet resistance of anion exchange membrane,
$R_1$ represents linear resistance of anion exchange membrane,
$R_2$ represents the resistivity of 0.5 M NaCl solution (aq.), and
S represents the surface area of electrode.

(2) Ion Exchange Capacity (IEC, meq/g)

Each anion exchange membrane was cut to 5 cm x 5 cm and prepared as a sample. The sample was washed with distilled water, and residual moisture was removed by tissues. 70 mL of 1M NaCl solution was filled in a vial, and the sample having moisture removed therefrom was placed in the 1M NaCl solution and immersed therein for 12 hours or more, to perform a first pre-treatment. Thereafter, the sample completed with the first pre-treatment was washed with distilled water a few times, and residual moisture was removed with tissues. 70 mL of 0.5M $Na_2CO_3$ solution was filled in a vial, and the sample having moisture removed therefrom was placed in the 0.5M $Na_2CO_3$ solution and immersed therein for 12 hours or more, to perform a second pre-treatment. Thereafter, the sample completed with the second pre-treatment was taken out of the vial, and the remaining solution was titrated with 0.01M $AgNO_3$ solution, and the volume of AgNOs solution used for titration was recorded. The sample was washed with distilled water a few times, and dried in a 80 °C convection oven for 15 minutes. Upon completion of the drying, the dried anion exchange membrane was weighted. By using the measured weight of the anion exchange membrane, an ion exchange capacity (IEC) was obtained from Equation 2. The results thereof are shown in Table 1.

[Equation 2] IEC(meq/g) = (volume of titration reagent (mL) x 0.01)/weight of dried anion exchange membrane (g) [Equation 2]

(3) Chemical Resistance

The anion exchange membranes prepared in Example 2 and Comparative Example 3 were each cut to 5 cm x 5 cm and prepared as a sample. The sample was immersed in NaOH 1M solution (aq.) and $H_2SO_4$ 0.5M solution (aq.), and the sheet resistance for each immersion time (days) was obtained by the same process as (1) sheet resistance ($\Omega \cdot cm^2$) above. The results thereof are shown in Table 2 and Table 3.

[Table 1]

| | Support material | Support basis weight ($g/m^2$) | Support Porosity (%) | Support thickness (μm) | Sheet resistanc ($\Omega \cdot cm^2$) | IEC (meq/g) |
|---|---|---|---|---|---|---|
| Example 1 | Polyvinyl alcohol | 22.5 | 80 | 90 | 1.5 | 2.8 |
| Example 2 | Polyvinyl alcohol | 34.9 | 77 | 125 | 2.1 | 2.4 |
| Example 3 | Polyvinyl alcohol | 46.4 | 74 | 150 | 4.6 | 2.1 |
| Example 4 | Polypropylene | 25.0 | 55 | 60 | 1.7 | 2.5 |
| Example 5 | Polypropylene | 40.7 | 45 | 80 | 7.0 | 1.8 |
| Example 6 | Polypropylene | 52.8 | 48 | 110 | 9.6 | 1.6 |
| Comparat ive Example 1 | Polyvinyl alcohol | 61.0 | 60 | 210 | 6.5 | 1.1 |
| Comparat ive Example 2 | Polypropylene | 62.8 | 29 | 150 | 11.9 | 0.9 |
| Comparat ive Example 3 | Polyvinyl alcohol | 34.9 | 77 | 125 | 3.2 | 1.1 |

Referring to Table 1, the porous polymer support of the anion exchange membranes prepared in Examples 1 to 6 was a polyvinyl alcohol or polypropylene structure having a basis weight of 22.5 $g/m^2$ to 52.8 $g/m^2$, a porosity of 45 % to 80 %, and a thickness of 60 μm to 125 μm. The basis weight or porosity of the porous polymer support of the anion exchange membranes prepared in Comparative Examples 1 and 2 is outside the range of Examples of the present disclosure. A crosslinkable monomer different from the crosslinkable monomer represented by Formula 1 in the anion exchange polymer forming composition of the anion exchange membrane prepared in Comparative Example 3 was used.

Compared to the anion exchange membranes prepared in Comparative Examples 1-3, the anion exchange membranes prepared in Examples 1-6 had a reduced sheet resistance of 9.6 $\Omega \cdot cm^2$ or less, and an improved exchange capacity (IEC) of 1.6 meq/g or more.

[Table 2]

| Immersion time (days) | 0 | 13 | 28 | 40 |
|---|---|---|---|---|
| NaOH 1M solution (aq.) | 1.86 | 1.91 | 1.98 | 1.99 |
| $H_2SO_4$ 0.5M solution (aq.) | 1.72 | 1.72 | 1.6 | 1.65 |

[Table 3]

| Immersion time (days) | 0 | 13 | 28 | 40 |
|---|---|---|---|---|
| NaOH 1M solution (aq.) | 3.25 | 2.10 | 2.01 | 1.96 |
| $H_2SO_4$ 0.5M solution (aq.) | 3.18 | 2.95 | 2.82 | 2.84 |

The anion exchange membrane prepared in Example 2, and the anion exchange membrane prepared in Comparative Example 3 were each immersed in NaOH 1M solution (aq.) and $H_2SO_4$ 0.5M solution (aq.), and the sheet resistance as a function of immersion time were recorded, and the results thereof are shown in Table 2 and Table 3, respectively. Referring to Table 2, 40 days after immersion in NaOH 1M solution (aq.) and $H_2SO_4$ 0.5M solution (aq.), respectively, the anion exchange membrane prepared in Example 2 showed a sheet resistance change of about 7% and about 4%. Referring to Table 3, 40 days after immersion in NaOH 1M solution (aq.) and $H_2SO_4$ 0.5M solution (aq.), respectively, the anion exchange membrane prepared in Comparative Example 3 showed a sheet resistance change of

about 40% and about 11%. This demonstrates that compared to the anion exchange membrane prepared in Comparative Example 3, the anion exchange membrane prepared in Example 2, showing a smaller sheet resistance change 40 days after immersion in NaOH 1M solution (aq.) and $H_2SO_4$ 0.5M solution (aq.), respectively, has superior chemical resistance.

This result shows that the anion exchange membranes prepared in Examples 1-6 are suitable for use in electrodialysis, bipolar membrane electrodialysis, electro-deionization, capacitive deionization, or water electrolysis.

**List of Reference Numerals for Major Elements**

1: CATION GROUPS, 2: POLYMER BACKBONE OF ANION EXCHANGE POLYMER,
3: COUNTER-ANION, 4: CO-CATION, 5: SUPPORT,
10, 40: ANION EXCHANGE MEMBRANE, 20: POROUS POLYMER SUPPORT, 21: PORE,
30: ANION EXCHANGE POLYMER BACKBONE HAVING CATION GROUPS,
31: ANION EXCHANGE POLYMER

## Claims

1. An anion exchange membrane comprising:

   a porous polymer support; and
   an anion exchange polymer,
   wherein the anion exchange polymer is situated on a surface and in pores of the porous polymer support,
   anion exchange groups of the anion exchange polymer are uniformly distributed on the surface and in the pores of the porous polymer support, the porous polymer support has a basis weight of about 10 $g/m^2$ to about 60 $g/m^2$, and
   the anion exchange polymer is a crosslinked product of a composition comprising a crosslinkable monomer represented by Formula 1:

   [Formula 1]

   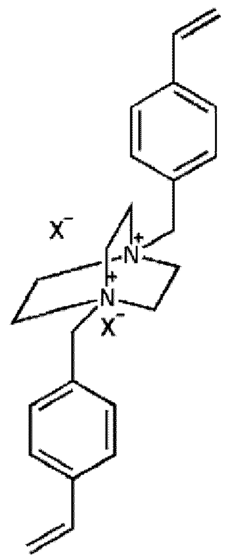

   In Formula 1,
   $X^-$ may be $F^-$, $Cl^-$, $Br^-$, or $I^-$.

2. The anion exchange membrane of claim 1,
   wherein the porous polymer support is a nonwoven fabric structure or a membrane structure.

3. The anion exchange membrane of claim 2,

wherein the membrane structure is a structure having uniformly arranged pores, or a 3D network structure.

**4.** The anion exchange membrane of claim 1,
wherein the porous polymer support has a porosity of about 30 % to about 80 %.

**5.** The anion exchange membrane of claim 1,
wherein the porous polymer support comprises one or more polymers selected from among polyethylene, polypropylene, polyethylene terephthalate, polyvinylalcohol, polybenzimidazole, polyarylene sulfide, polyether ether ketone, polyether sulfone, polysulfone, polystyrene, poly(arylene ether sulfone), and polyether ketone.

**6.** The anion exchange membrane of claim 1,
wherein the porous polymer support has a thickness of about 10 μm to about 110 μm.

**7.** The anion exchange membrane of claim 1,
wherein the anion exchange membrane has an average thickness of about 10 μm to about 200 μm.

**8.** The anion exchange membrane of claim 1,
wherein the anion exchange membrane has an ion exchange capacity of 1.5 meq/g or more.

**9.** The anion exchange membrane of claim 1,
wherein the anion exchange membrane has a surface resistivity of 10 $\Omega \cdot cm^2$ or less.

**10.** The anion exchange membrane of claim 1,
wherein the anion exchange membrane is utilized in electrodialysis, bipolar membrane electrodialysis, electrodeionization, capacitive deionization, or water electrolysis.

FIG. 1

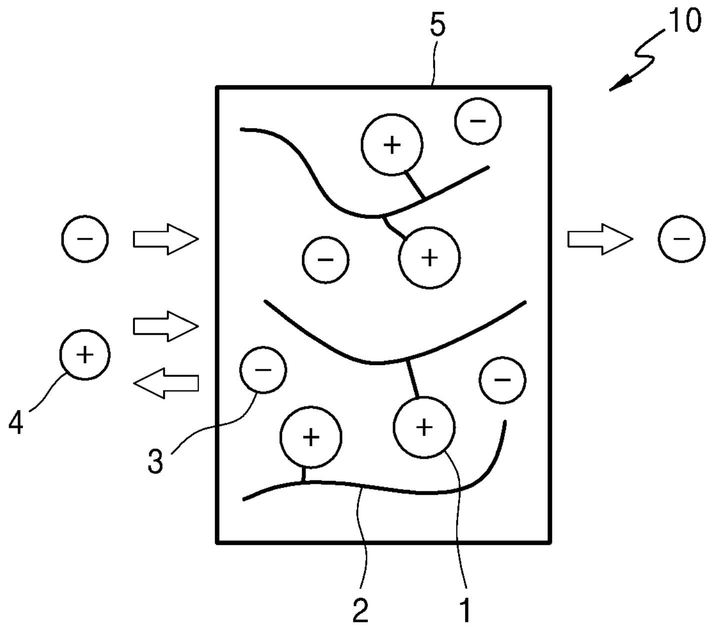


FIG. 2

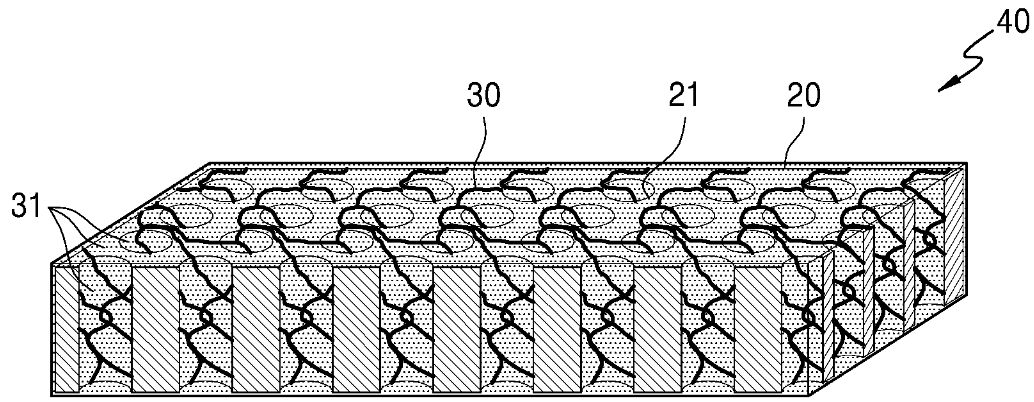

FIG. 3

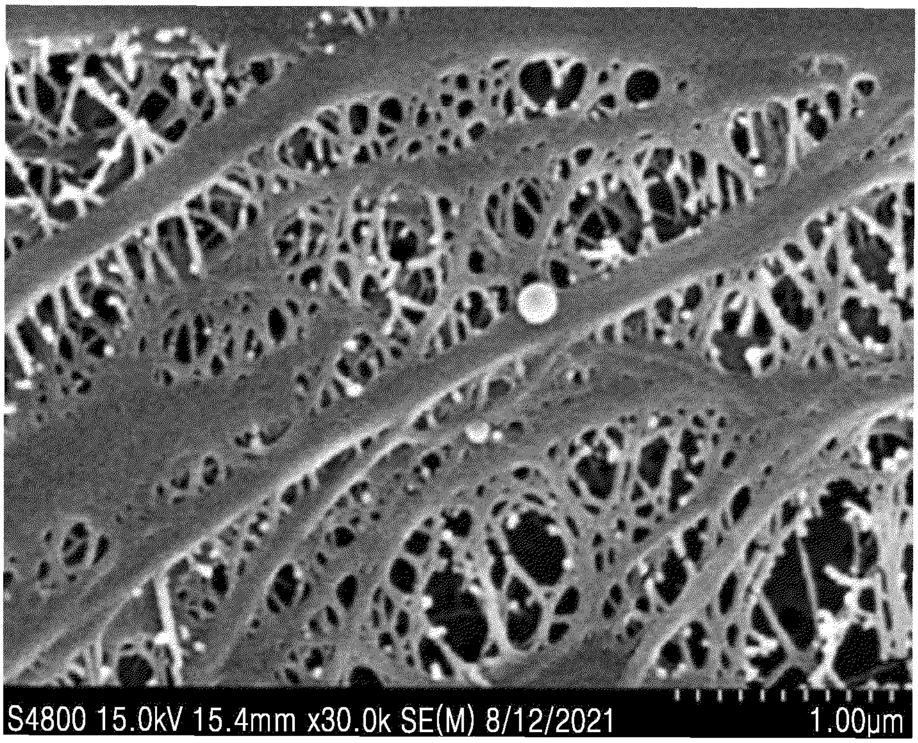

FIG. 4

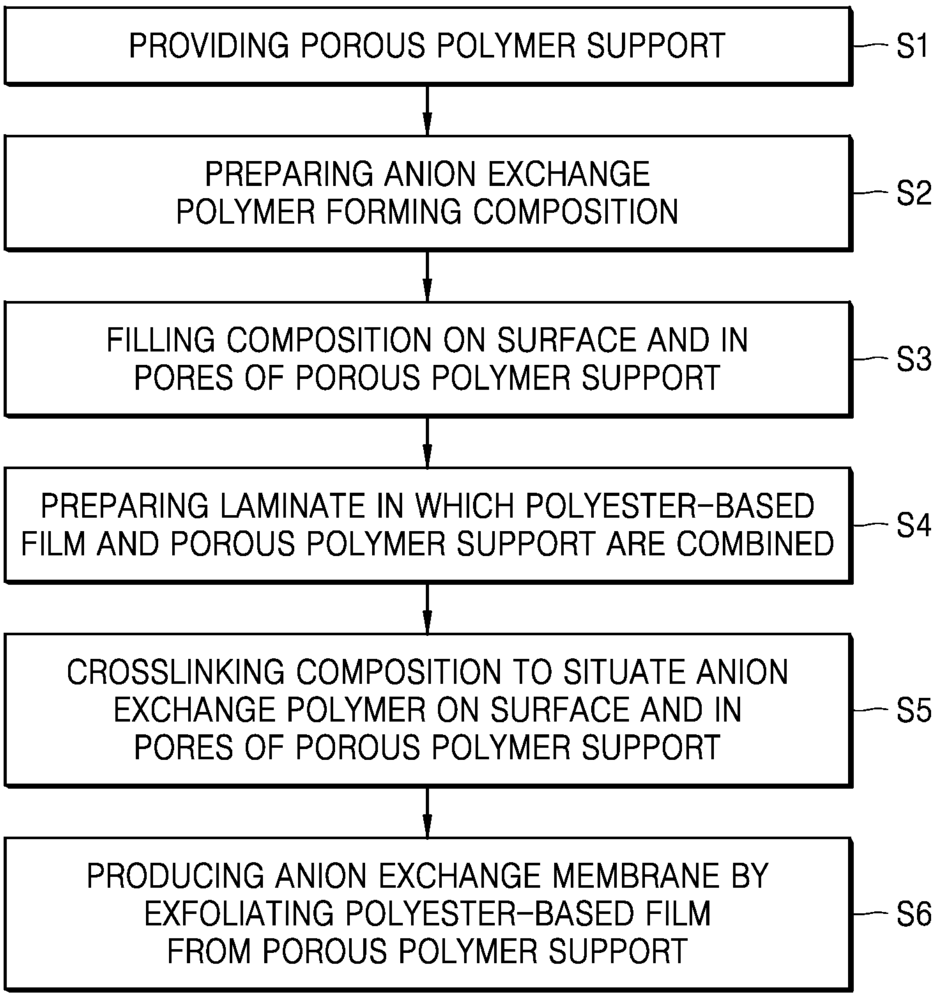
PROVIDING POROUS POLYMER SUPPORT
S1
PREPARING ANION EXCHANGE POLYMER FORMING COMPOSITION
S2
FILLING COMPOSITION ON SURFACE AND IN PORES OF POROUS POLYMER SUPPORT
S3
PREPARING LAMINATE IN WHICH POLYESTER-BASED FILM AND POROUS POLYMER SUPPORT ARE COMBINED
S4
CROSSLINKING COMPOSITION TO SITUATE ANION EXCHANGE POLYMER ON SURFACE AND IN PORES OF POROUS POLYMER SUPPORT
S5
PRODUCING ANION EXCHANGE MEMBRANE BY EXFOLIATING POLYESTER-BASED FILM FROM POROUS POLYMER SUPPORT
S6

**INTERNATIONAL SEARCH REPORT**

International application No. **PCT/KR2022/018424**

**A. CLASSIFICATION OF SUBJECT MATTER**

**C08J 5/22**(2006.01)i; **C08F 212/36**(2006.01)i; **B01D 61/42**(2006.01)i; **C02F 1/469**(2006.01)i

According to International Patent Classification (IPC) or to both national classification and IPC

**B. FIELDS SEARCHED**

Minimum documentation searched (classification system followed by classification symbols)

C08J 5/22(2006.01); B01D 61/42(2006.01); B01D 71/40(2006.01); C08F 12/34(2006.01); C08F 220/52(2006.01); C08F 226/06(2006.01); C09D 125/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 음이온 교환막(anion exchange membrane), 음이온 교환 폴리머(anion exchange polymer), 가교성 모노머(crosslinkable monomer), 다공성 고분자 지지체(porous polymer support)

**C. DOCUMENTS CONSIDERED TO BE RELEVANT**

| Category* | Citation of document, with indication, where appropriate, of the relevant passages | Relevant to claim No. |
|---|---|---|
| Y | JP 6313454 B2 (FUJIFILM CORPORATION) 18 April 2018 (2018-04-18) See claims 1 and 16-17; paragraphs [0002], [0086]-[0087], [0106], [0108] and [0119]-[0120]; and tables 1-3. | 1-10 |
| Y | KR 10-2015-0099549 A (KURARAY CO., LTD. et al.) 31 August 2015 (2015-08-31) See claims 1, 10 and 13; and paragraphs [0039], [0142], [0150]-[0160] and [0231]-[0232]. | 1-10 |
| A | WO 2015-058137 A2 (VIRGINIA TECH INTELLECTUAL PROPERTIES, INC.) 23 April 2015 (2015-04-23) See entire document. | 1-10 |
| A | SINGH, A. K. et al. High performance cross-linked dehydro-halogenated poly (vinylidene fluoride-co-hexafluoro propylene) based anion-exchange membrane for water desalination by electrodialysis. Separation and purification technology. 2020, vol. 234, article no. 116078, pp. 1-9. See entire document. | 1-10 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 March 2023** | **02 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/018424**

**C. DOCUMENTS CONSIDERED TO BE RELEVANT**

| Category* | Citation of document, with indication, where appropriate, of the relevant passages | Relevant to claim No. |
|---|---|---|
| A | WO 2020-201714 A1 (FUJIFILM MANUFACTURING EUROPE BV et al.) 08 October 2020 (2020-10-08)<br>See entire document. | 1-10 |

Form PCT/ISA/210 (second sheet) (July 2022)

**INTERNATIONAL SEARCH REPORT**
**Information on patent family members**

International application No.
**PCT/KR2022/018424**

| Patent document cited in search report | Publication date (day/month/year) | Patent family member(s) | Publication date (day/month/year) |
|---|---|---|---|
| JP 6313454 B2 | 18 April 2018 | EP 3184558 A1 | 28 June 2017 |
| | | EP 3184558 A4 | 11 October 2017 |
| | | EP 3184558 B1 | 29 August 2018 |
| | | JP 2017-027595 A1 | 27 April 2017 |
| | | WO 2016-027595 A1 | 25 February 2016 |
| KR 10-2015-0099549 A | 31 August 2015 | CN 104884510 A | 02 September 2015 |
| | | CN 104884510 B | 20 October 2017 |
| | | EP 2940068 A1 | 04 November 2015 |
| | | EP 2940068 A4 | 24 August 2016 |
| | | JP 2017-103819 A1 | 12 January 2017 |
| | | JP 6358597 B2 | 18 July 2018 |
| | | TW 201434935 A | 16 September 2014 |
| | | TW 34935 A | 16 September 2014 |
| | | TW 481 B | 01 March 2018 |
| | | TW I616481 B | 01 March 2018 |
| | | US 10125036 B2 | 13 November 2018 |
| | | US 2015-0291452 A1 | 15 October 2015 |
| | | WO 2014-103819 A1 | 03 July 2014 |
| WO 2015-058137 A2 | 23 April 2015 | WO 2015-058137 A3 | 11 June 2015 |
| WO 2020-201714 A1 | 08 October 2020 | None | |

Form PCT/ISA/210 (patent family annex) (July 2022)